# EUROPEAN PATENT APPLICATION

(11) **EP 3 095 683 A1**
(43) Date of publication of application: **23.11.2016**
(21) Application number: 15737743.3
(22) Date of filing: 14.01.2015
(51) Int. Cl.: B62M 6/55, B62M 6/50

(54) **ELECTRIC ASSIST UNIT, ELECTRIC ASSIST MOBILE BODY, ELECTRIC ASSIST MOBILE BODY SET, AND METHOD OF CONTROLLING ELECTRIC ASSIST MOBILE BODY**

(30) Priority: 15.01.2014 JP 2014005251; 26.03.2014 JP 2014063040
(71) Applicant: Sunstar Giken Kabushiki Kaisha, Takatsuki-shi, Osaka 569-1134 (JP); Sunstar Suisse SA, 1163 Etoy (CH)
(72) Inventor: YOSHIIE, Akihito, Takatsuki-shi Osaka 569-1134 (JP); YAMAGUCHI, Katsuhiro, Takatsuki-shi Osaka 569-1134 (JP); NISHIKAWA, Masafumi, Takatsuki-shi Osaka 569-1134 (JP); KANATA, Takeshi, 1163 Etoy (CH)
(74) Representative: Jenkins, Peter David
(86) International application number: PCT/JP2015/050810
(87) International publication number: WO 2015/108069

(57) **Abstract**

To provide a power-assisted moving vehicle in which information stored in a storage medium is not required to be re-recorded if a control device needs to be replaced.

A power-assisted unit to be attached to a power-assisted moving vehicle capable of assisting a first driving force generated by a human power by means of a second driving force generated by an electric power includes a sensor unit having a sensor for detecting a physical quantity concerning the power-assisted moving vehicle, and a storage medium, a motor for generating the second driving force, and a control device configured to control the motor on the basis of a detection result by the sensor.

## Description

### TECHNICAL FIELD

The present invention relates to a power-assisted unit.

### BACKGROUND ART

There has been known a power-assisted bicycle capable of assisting a driving force generated by a pedaling force by means of a driving force (assisting force) generated by a motor driving force (e.g., Patent Literature 1 below). In general, in the power-assisted bicycle, a sensor detects the pedaling force (torque) and a vehicle speed, and a control device decides an optimum assist ratio (ratio of assisting force to pedaling force) on the basis of a detection result by the sensor to control the motor on the basis of the decided assist ratio.

### CITATION LIST

### PATENT LITERATURE

Patent Literature 1: Japanese Patent Laid-Open No. 2008-254592

### SUMMARY OF INVENTION

### TECHNICAL PROBLEM

In such a power-assisted bicycle, the control device is usually provided with a storage medium, and thus, if some information is desired to be recorded in the power-assisted bicycle, the information can be stored in the storage medium. However, if the control device needs to be replaced in a case of failure, for example, the storage medium is also to be replaced. For this reason, the information having been stored in the storage medium before replacing is required to be re-recorded in a storage medium to be newly mounted. Moreover, in the power-assisted bicycle, since a sensitivity of a torque sensor detecting the torque is sensitive, an individual variability of the torque sensor is to have an effect on a torque detection accuracy and then on a motor control accuracy. Therefore, a torque detection value is desirably to be corrected in terms of the effect due to the individual variability of the torque sensor. In addition, it is desirable to smoothly perform such a correction even if such a situation occurs that the motor is replaced in a case of failure of the motor or the like.

Further, in the power-assisted bicycle of related art, since motor capability or a decision algorithm of the assist ratio is fixed, a flexible power-assistance depending on the situation cannot be performed. For example, in a case where one power-assisted bicycle is shared by a plurality of users (e.g., a young person and an old person), an optimum assist characteristic differs depending on a difference in the pedaling force between the users. Alternatively, in a case where one user uses one power-assisted bicycle for a plurality of intended purposes (e.g., travel to workplace and mountain climbing), an optimum assist characteristic differs depending on a difference in an intended purpose. Furthermore, in a case where one user uses a plurality of bicycles depending on the intended purposes, it is not necessarily economic to use as these bicycles the power-assisted bicycles which are relatively expensive. These problems are not limited to the power-assisted bicycle but common in various power-assisted moving vehicles capable of assisting the driving force generated by a human power by means of the driving force generated by an electric power.

### SOLUTION TO PROBLEM

The present invention has been made in order to solve at least a part of the problems described above, and can be achieved as the following aspects, for example.

According to a first aspect of the present invention, provided is a power-assisted unit to be attached to a power-assisted moving vehicle capable of assisting a first driving force generated by a human power by means of a second driving force generated by an electric power. This power-assisted unit includes a sensor unit having a sensor for detecting a physical quantity concerning the power-assisted moving vehicle and a storage medium, a motor for generating the second driving force, and a control device configured to control the motor on the basis of a detection result by the sensor.

In such a power-assisted unit, if the control device (the control device and the motor in a case where the control device is built in the motor) needs to be replaced in a case of failure, the control device may be separated from the sensor unit and the control device may be replaced in a state where the sensor unit is left on the power-assisted moving vehicle side, which allows information recorded in the storage medium of the sensor unit to remain on the power-assisted moving vehicle side. This omits the need to, in replacing the control device, record again in the storage medium the information to be recorded in the storage medium. Alternatively, the information desired to be cumulatively accumulated on the storage medium may not be interrupted caused by the replacement of the control device. In other words, it is not necessary to work to record in the storage medium the information having been accumulated before replacing the control device.

According to a second aspect of the invention, in the first aspect, stores therein in advance sensor information that is information regarding an individual characteristic of the sensor. The control device controls the motor on the basis of the detection result by the sensor and the sensor information. According to such an aspect, before shipping the power-assisted moving vehicle, the sensor information corresponding to the sensor of the sensor unit may be stored in the storage medium in advance, allowing the control device to read out the sensor information to correct the detection result by the sensor on the basis of the relevant sensor information for controlling the motor. That is, an effect due to the individual variability of the sensor can be corrected. In addition, even if the control device is replaced in a case of failure or the like, the sensor information may remain on the power-assisted moving vehicle side, omitting the need to write again the sensor information into the storage medium. Therefore, the sensor detection value can be smoothly corrected on the basis of the sensor information.

According to a third aspect of the invention, in the second aspect, the sensor information includes a correction value for correcting a detection value of the sensor depending on the individual characteristic. According to such an aspect, the detection value of the sensor can be easily corrected on the basis of the sensor information without performing a complex arithmetic.

According to a fourth aspect of the invention, in any one of the first to third aspects, at least one of the motor and the control device is configured to be detachably connected to the sensor unit. According to such an aspect, the user can flexibly use the power-assisted moving vehicle depending on the situation. For example, the user may prepare a plurality of motors different in a specification to selectively connect one of the plurality of motors to the sensor unit depending on a user of the power-assisted moving vehicle, an intended purpose of use and the like. Alternatively, the user may prepare a plurality of moving vehicle bodies to each of which the sensor unit is fixed to selectively attach one motor to one of the plurality of moving vehicle bodies. In other words, the motor can be shared between a plurality of moving vehicle bodies. Alternatively, the user may, when wanting to make a replacement purchase of the power-assisted moving vehicle, newly purchase only the moving vehicle body to which the sensor unit is fixed to connect the previously owing motor to this sensor unit.

According to a fifth aspect of the invention, in any one of the first to fourth aspects, the motor has the control device built therein. According to such an aspect, in a case where the motor connected to the sensor unit is replaced, the control device fitting with the changed motor is also made to be replaced at the same time. Therefore, a workload associated with the replacement may be reduced in replacing both the motor and the control device. Moreover, in the fifth aspect including the fourth aspect, in a case where the user uses the power-assisted unit so as to selectively connect one of a plurality of motors to the sensor unit, it is possible to easily achieve control of the assisting force fitting with the motor connected to the sensor unit. Furthermore, the motor and the control device can be collectively attached to and detached from the sensor unit, facilitating attachment and detachment operations. Additionally, also in a case where the power-assisted unit is used in the various usages exemplified in relation to the fourth aspect, the power-assisted unit according to the fifth aspect including the second aspect can smoothly correct the sensor detection value on the basis of the sensor information.

According to a sixth aspect of the invention, in any one of the first to fifth aspects, the control device is configured to read out the sensor information stored in the storage medium every time the power-assisted unit is activated. According to such an aspect, in a case where the control device (the control device and the motor in the fifth aspect) is replaced, the replaced control device can acquire the sensor information corresponding to the sensor of the sensor unit from the storage medium and smoothly correct the sensor detection value on the basis of the sensor information.

According to a seventh aspect of the invention, in any one of the first to sixth aspects, the motor is configured to be detachably connected to the sensor unit. The motor includes a first motor and a second motor. The first motor and the second motor are different from each other in a specification, and are configured to be selectively connectable to the sensor unit. According to such an aspect, the user may selectively connect one of the first and second motors to the sensor unit depending on a user of the power-assisted moving vehicle, an intended purpose of use and the like. As a result, the flexible power-assistance may be provided depending on the situation of the user.

According to an eighth aspect of the invention, in any one of the first to sixth aspects, the motor is configured to be detachably connected to the sensor unit. The motor includes a first motor having a first control device built therein and a second motor having a second control device built therein. Specifications are different from each other at least one of between the first motor and the second motor and between the first control device and the second control device. The first motor and the second motor are configured to be selectively connectable to the sensor unit. According to such an aspect, the same effect as according to the seventh aspect is obtained.

According to the ninth aspect of the invention, a power-assisted moving vehicle is provided. This power-assisted moving vehicle includes a moving vehicle body and the power-assisted unit according to any of the first to eighth aspects. According to such a power-assisted moving vehicle, the same effects as according to the first to eighth aspects are obtained.

According to the tenth aspect of the invention, a power-assisted moving vehicle is provided. This power-assisted moving vehicle includes a moving vehicle body and the power-assisted unit according to any one of the fourth aspect, the fifth and sixth aspects including at least the fourth aspect, and the seventh and eighth aspects. The sensor is configured to be capable of detecting the physical quantity even in a state where the sensor unit is not connected to the motor. The sensor unit includes a record device for recording the detected physical quantity in the storage medium. According to such an aspect, the physical quantity concerning the power-assisted moving vehicle, that is, a moving (running) condition of the power-assisted moving vehicle can be always monitored. Therefore, if the motor optimized depending on a monitoring result is prepared and the relevant motor is connected to the sensor unit, the assist characteristic more suitable for the user can be provided. In addition, even if the control device is replaced, or the control device and the motor are replaced, the storage medium is left on the power-assisted moving vehicle side, allowing the data of the physical quantity to be continuously accumulated without losing the data of the physical quantity accumulated before the replacement.

According to the eleventh aspect of the invention, a power-assisted moving vehicles set is provided. This power-assisted moving vehicles set includes the power-assisted moving vehicle according to the ninth aspect which includes at least one of the fourth aspect, the fifth and sixth aspects including at least the fourth aspect, and the seventh and eighth aspects, or according to the tenth aspect. The power-assisted moving vehicle includes a first moving vehicle body and a second moving vehicle body as the moving vehicle body. The sensor unit includes a first sensor unit attached to the first moving vehicle body and a second sensor unit attached to the second moving vehicle body. According to such a power-assisted moving vehicles set, at least one of the control device and the motor can be shared by the first moving vehicle body and the second moving vehicle body, which is economical.

According to a twelfth aspect of the invention, provided is a method for controlling a power-assisted moving vehicle capable of assisting a first driving force generated by a human power by means of a second driving force generated by an electric power. In this method, in a moving vehicle body to which is attached a sensor unit provided with a sensor for detecting a physical quantity concerning the power-assisted moving vehicle, sensor information that is information regarding an individual characteristic of the sensor is stored in the sensor unit in advance, and a control device configured to control a motor for generating the second driving force reads out the sensor information from the sensor unit, and the motor is controlled on the basis of the read out sensor information and a detection result by the sensor. According to such a method, the same effect as according to the second aspect is obtained.

### BRIEF DESCRIPTION OF DRAWINGS

Figure 1 is a diagram schematically illustrating a power-assisted bicycle as an embodiment of the present invention.
Figure 2 is a schematic view illustrating a state before connecting a motor to a sensor unit.
Figure 3 is a schematic view illustrating a procedure for connecting the motor to the sensor unit.
Figure 4 is a schematic block diagram illustrating a configuration of the sensor unit and the motor.
Figure 5 is a diagram schematically illustrating a power-assisted bicycles set as a second embodiment.

### DESCRIPTION OF EMBODIMENTS

### A. First embodiment:

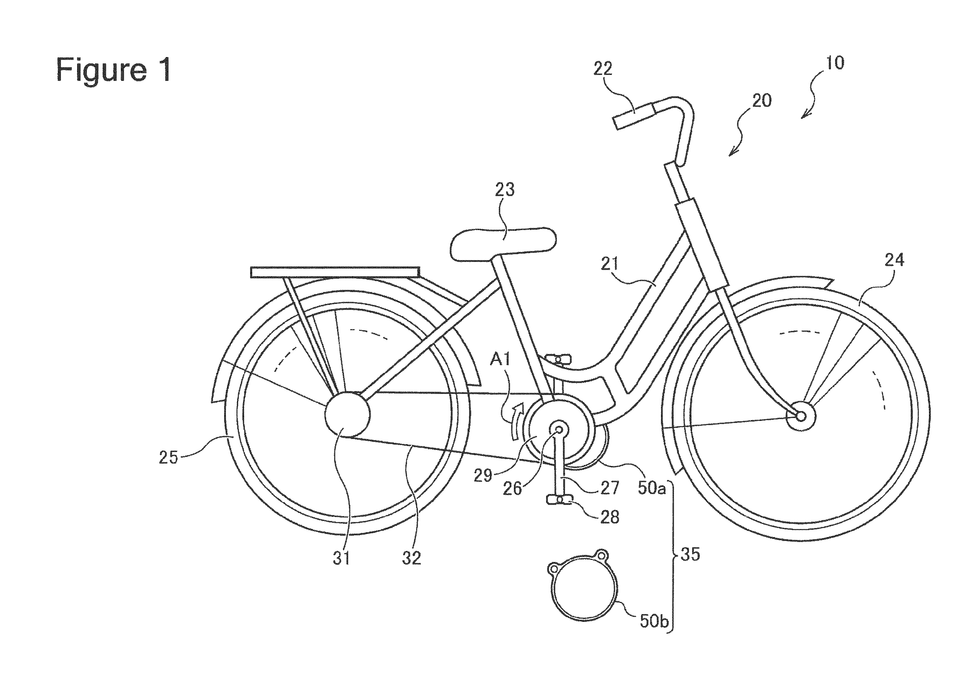

Figure 1 illustrates a schematic configuration of a power-assisted bicycle 10 as an embodiment of the present invention. The power-assisted bicycle 10 includes a bicycle main body 20 and a power-assisted unit 35. The bicycle main body 20 includes a vehicle body frame 21, a handle 22, a saddle 23, a front wheel 24, and a rear wheel 25.

At a center end of the vehicle body frame 21, there is rotatably journaled a drive shaft 26, at both right and left ends of which are attached pedals 28 via pedal cranks 27. There is concentrically attached to the drive shaft 26 a sprocket 29 via a one-way clutch (not shown) for transmitting only a rotation force in a direction of an arrow A1 corresponding to a forward movement direction of a vehicle body. An endless chain 32 is trained over this sprocket 29 and a rear wheel dynamic mechanism 31 provided at the center of the rear wheel 25.

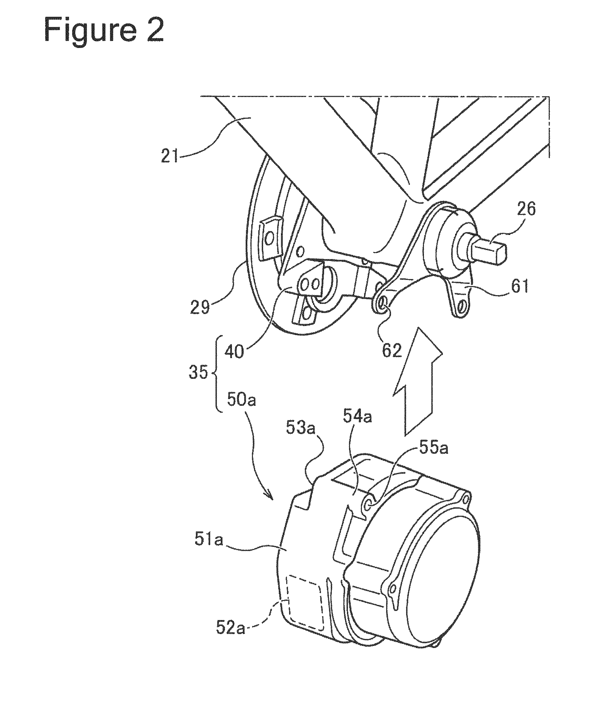

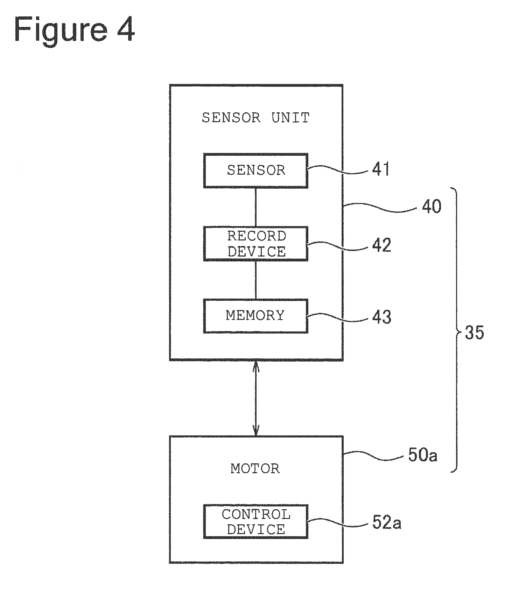

The power-assisted unit 35 includes a sensor unit 40 (not shown in Figure 1, see Figure 2) and a plurality (here, two) of motors 50a and 50b. The sensor unit 40 includes a sensor 41 (see Figure 4) described later, and the sensor 41 is provided for detecting a predetermined physical quantity concerning the power-assisted bicycle 10. Such a physical quantity includes a pedaling force (torque) of the pedal 28 and a vehicle speed of the power-assisted bicycle 10. The sensor 41 may be a single sensor capable of detecting a plurality of physical quantities, or may be a plurality of sensors each provided for each physical quantity to be detected.

The motors 50a and 50b are provided in order to provide a driving force (assisting force) for assisting a driving force generated by a human power, that is, the pedaling force by the user pedaling the pedal 28. The motors 50a and 50b are different from each other in a specification (specification concerning an assist function), and are selectively connected to the sensor unit 40 in a detachable manner. In the embodiment, a rated output of the motor and an algorithm for deciding the assisting force are different as the relevant specification. Figure 1 illustrates a state where the motor 50a is connected to the sensor unit 40. The driving force generated by the motor 50a acts via a gear (not shown) on a transmit gear for transmitting the pedaling force of the pedal 28 to the sprocket 29. This allows the pedaling force to be combined with the assisting force to assist the pedaling force. In the following description, in a case where the motors 50a and 50b are not distinguished, the motor or components of the motor are described using the reference sign from which "a" and "b" are omitted.

In such a power-assisted bicycle 10, the assisting force by means of the motor 50a is decided as below. First, the sensor unit 40 (more specifically, the sensor 41) detects the pedaling force of the pedal 28 (torque) and the vehicle speed of the power-assisted bicycle 10. Next, a predetermined algorithm is performed on the basis of that detection result to decide the optimum assist ratio. Then, the motor is controlled on the basis of the decided assist ratio. Various known algorithms can be used for the above algorithm.

Figure 2 illustrates a state before connecting the motor 50a to the sensor unit 40. The motor 50a includes a housing 51a, in an inside of which a control device 52a is built. The control device 52a is configured as, for example, a microcomputer having a CPU and a memory. The memory stores therein the algorithm described above, and the CPU performs the relevant algorithm. The housing 51a has a connector 53a formed at an upper portion thereof for electrically connecting to the sensor unit 40 (the upper portion in a state where the motor 50a is connected to the sensor unit 40). Additionally, the housing 51a has formed at the upper portion thereof an attachment part 54a having two hole parts 55a (only one of which is shown in Figure 2).

On the other hand, the bicycle main body 20 has the sensor unit 40 fixed to the vehicle body frame 21 between the vehicle body frame 21 and the sprocket 29. The sensor unit 40 has in an inside thereof at least a part of the sensor for detecting the pedaling force (torque) and the vehicle speed as described above. The sensor(s) of various known kinds can be used for the sensor for detecting the pedaling force and the vehicle speed. An outer shape of the sensor unit 40 is formed into a shape of a connector mating with the connector 53a, and when the motor 50a is connected to the sensor unit 40, the sensor unit 40 is electrically connected with the control device 52a as described later.

The vehicle body frame 21 has a motor fixing member 61 fixed around the drive shaft 26 on a side opposite to the sensor unit 40. The motor fixing member 61 has two arms extending downward in a substantially V-shape, and these arms each have a through-hole 62 formed at a tip thereof.

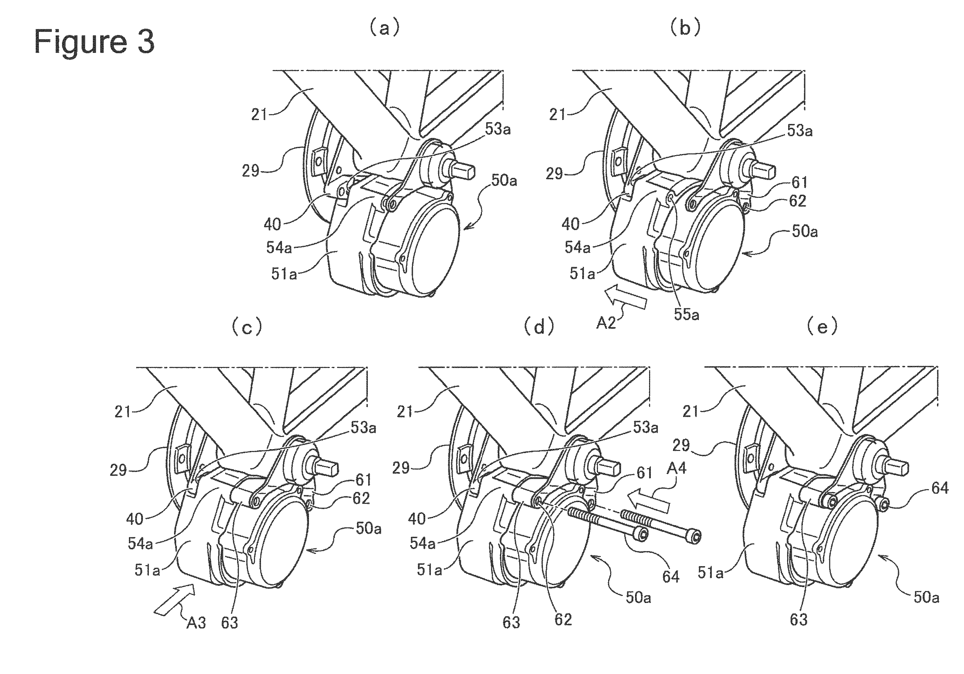

Figure 3 illustrates a procedure for connecting the motor 50a to the sensor unit 40. In connecting the motor 50a, first, the motor 50a is inserted between the sprocket 29 and the motor fixing member 61 as shown in Figure 3(a). Specifically, the motor 50a is inserted at a position such that the hole part 55a of the attachment part 54a fits with the through-hole 62 of the motor fixing member 61 and the sensor unit 40 fits with the connector 53a. Next, the motor 50a is made to move in a direction of an arrow A2, that is, a direction toward the sensor unit 40 to connect a connector of the sensor unit 40 with the connector 53a as shown in Figure 3(b).

Next, an attachment member 63 is inserted between the attachment part 54a and the motor fixing member 61 in a direction of an arrow A3 as shown in Figure 3(c). The attachment member 63 has two through-holes formed so as to fit with two through-holes 62 respectively. Next, a bolt 64 is inserted into each of two through-holes 62 in a direction of an arrow A4 as shown in Figure 3(d). Then, the bolt 64 is tightened until the bolt 64 reaches the hole part 55a to fix the motor 50a to the bicycle main body 20 as shown in Figure 3(e). In this way, the motor 50a in a state of being connected to the sensor unit 40 is fixed to the bicycle main body 20. The motor 50a can be detached in a reverse procedure to the attaching procedure of the motor 50a described above. Attaching and detaching the motor 50b can be performed in the same way as for the motor 50a. Note that an aspect for connecting the sensor unit 40 and the motor 50a and an aspect for fixing the motor 50a are not specifically limited, but any aspect may be adopted.

The power-assisted unit 35 in the power-assisted bicycle 10 described above can be attached in a manner such that the user selectively connects any one of the motor 50a and the motor 50b to the sensor unit 40 fixed to the bicycle main body 20. In the embodiment, the motors 50a and 50b are different from each other in the rated output of the motor and the algorithm for deciding the assisting force as described above. Examples of the difference in the algorithm include a difference in a method for deciding an assist ratio which is decided depending on a predefined parameter including the pedaling force and the vehicle speed, a difference in the above parameters, and a difference in the assist ratio depending on the parameter (meaning that the assist ratio decision method is the same, but a correspondence relationship between the parameter and the assist ratio is different), for example. The larger the rated output of the motor, the larger the assist ratio can be set.

According to the power-assisted unit 35 in the power-assisted bicycle 10, the user can selectively connect and attach the motor 50a or 50b to the sensor unit 40 fixed to the bicycle main body 20 depending on a usage condition difference, flexibly using the power-assisted bicycle 10. For example, in a case where one power-assisted bicycle 10 is shared by a plurality of users (e.g., a young person and an old person), one of the motors 50a and 50b may be selected depending on a difference in the pedaling force between the users. Specifically, in a case where a young person larger in the pedaling force uses the power-assisted bicycle 10, the motor may be selected which has the rated output relatively smaller and the assist ratio relatively smaller, and in a case where an old person smaller in the pedaling force uses the power-assisted bicycle 10, a motor may be selected which has the rated output relatively larger and the assist ratio relatively larger. In addition, in a case where one user uses one power-assisted bicycle 10 for a plurality of intended purposes, one of the motors 50a and 50b may be selected depending on the intended purpose. For example, in a case the bicycle 10 is used for the travel to workplace, the motor may be selected which has the rated output relatively smaller and the assist ratio relatively smaller, and in a case where the bicycle 10 is used for the mountain climbing, a motor may be selected which has the rated output relatively larger and the assist ratio relatively larger. Alternatively, in wanting to do fitness training (wanting to get a large exercise load), the motor may be selected which has the rated output relatively smaller and the assist ratio relatively smaller. Of course, the power-assisted bicycle 10 can be used as a simple bicycle which has no assist function with neither the motors 50a nor 50b being attached thereto. Furthermore, a battery suitable for the selected motor may be selected to give more comfortable usage environment.

Moreover, according to the power-assisted unit 35 in the power-assisted bicycle 10, the motors 50a and 50b different in the rated output of the motor are provided, easily changing the assisting force. Further, since the control device 52 is built in the motor 50, in a case where the motor 50 is replaced, the control device 52 fitting with the changed motor 50 (that is, the algorithm for deciding the assist force) is also to made to be replaced at the same time. Accordingly, the control of the assisting force can be easily achieved which fits with the motor 50 attached to the bicycle main body 20. Furthermore, the motor 50 and the control device 52 can be collectively attached and detached, facilitating attachment and detachment operations.

Figure 4 is a schematic block diagram illustrating a configuration of the sensor unit 40 and the motor 50a. As shown in the figure, the sensor unit 40 includes the sensor 41, a record device 42, and a memory 43. The motor 50a includes the control device 52a. The sensor 41 is as described above.

The memory 43 is a non-volatile storage medium. In the embodiment, the memory 43 is a rewritable storage medium, but in a case where the physical quantity is not recorded in the memory 43 as described later, the memory 43 may be an unrewritable storage medium. The memory 43 stores therein in advance information regarding a individual characteristic of the sensor 41 (hereinafter, also referred to as sensor information) before shipping the power-assisted unit 35. Since a sensitivity of the torque sensor is very sensitive, leading to generation of the relatively larger individual variability, the control device 52 has a function to correct an effect due to such an individual variability in the embodiment. The sensor information stored in the memory 43 is used for the correction like this. In the embodiment, the sensor information includes a sensor correction value for correcting a sensor detection value depending on the individual characteristic of the torque sensor. The correction value is a value added to or subtracted from a value output by the sensor 41 depending on the individual variability of the sensor 41 when a predetermined torque acts on the drive shaft 26 by means of the pedaling force. Such a sensor correction value is defined depending on a value of a sensor sensitivity (sensor output), and stored to be associated with the sensor sensitivity using a function, a table of the like. In other words, a correspondence relationship between the sensor sensitivity and the sensor correction value is stored as the sensor information. In addition, in the embodiment, the sensor information stored in the memory 43 in advance includes a temperature correction value. Since the sensitivity of the sensor 41 suddenly changes when a temperature condition reaches sub-zero, a temperature correction value is used in addition to the sensor correction value if a temperature sensor mounted on the bicycle main body 20 detects a temperature below zero.

Furthermore, in the embodiment, the memory 43 has recorded therein in advance a test date when the individual characteristic of the sensor 41 is measured, and a manufacturing lot number of the sensor 41. These pieces of information may be referred in a case of failure of the sensor unit 40 or in testing required by the user to be used as reference information for response.

The record device 42 has a function to record the physical quantity (the torque and the vehicle speed in the embodiment) detected by the sensor 41 in the memory 43. In the embodiment, the sensor 41 and the record device 42 are configured to operate regardless of whether or not the motor 50 is connected to the sensor unit 40. In other words, so long as the sensor unit 40 is supplied with the electric power, the sensor 41 always detects the physical quantity, and the record device 42 records the relevant physical quantity in the memory 43. Furthermore, the record device 42 records the number of times the power-assisted unit 35 is activated, and a temperature detection result measured by the temperature sensor in the memory 43. The physical quantity, the number of times of the activation, and the temperature record recorded in this way can be used for monitoring a running condition of the bicycle main body 20. In other words, if the motor 50 optimized depending on a monitoring result is prepared and the relevant motor 50 is connected to the sensor unit 40, the assist characteristic more suitable for the user can be provided.

In the power-assisted unit 35 described above, the control device 52 reads out the sensor information recorded in the memory 43 at a predetermined timing to control the motor 50 on the basis of this sensor information and the detection result of the sensor 41. In the embodiment, the control device 52 reads out the sensor information recorded in the memory 43 every time the power-assisted unit 35 is activated. According to such a configuration, when the motor 50a or 50b is selectively connected to the sensor unit 40, the control device 52 of the newly connected motor 50 can reliably acquire the sensor information to smoothly correct the sensor detection value. However, a predetermined timing may be adequately set, and, for example, may be a timing when the user inputs an instruction through a user interface (e.g., button) provided to the power-assisted unit 35.

According to the power-assisted bicycle 10 described above, the sensor information is stored on the sensor unit 40 side, allowing the control device 52 of the newly connected motor 50 to acquire the sensor information from the sensor unit 40 even if the motor 50 connected to the sensor unit 40 is replaced. In other words, the sensor information is not required to be written into the memory 43 every time the motor 50 is replaced. Therefore, the sensor detection value can be smoothly corrected on the basis of the sensor information. Further, the information desired to be cumulatively accumulated on the memory 43, for example, the physical quantity, the number of times of activation, and the temperature record described above, may not be interrupted caused by the replacement of the motor 50.

### B. Second embodiment:

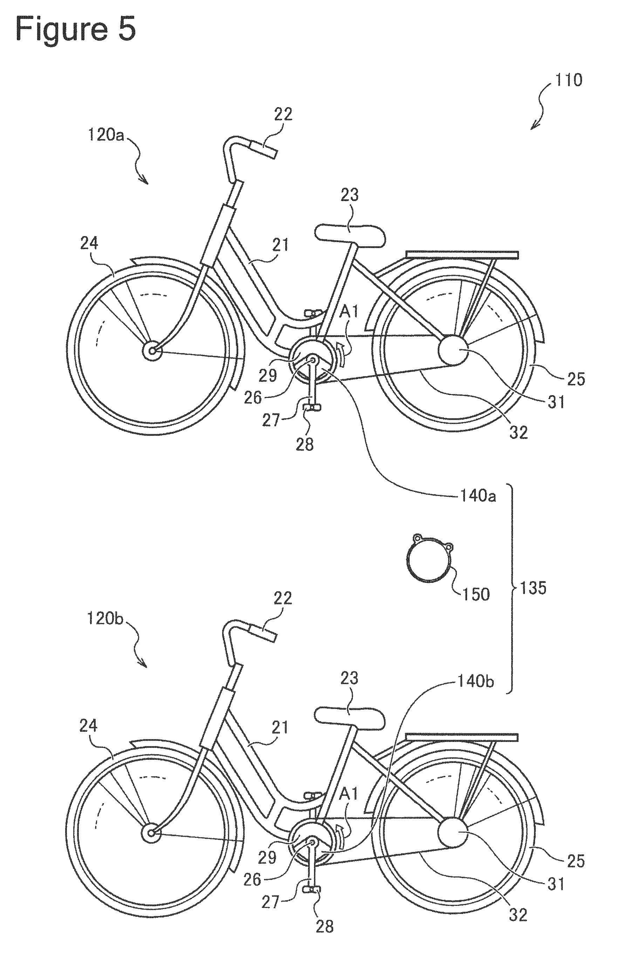

Figure 5 illustrates a schematic configuration of a power-assisted bicycles set 110 as a second embodiment. The set 110 includes two bicycle main bodies 120a and 120b, and a power-assisted unit 135. The power-assisted unit 135 includes two sensor units 140a and 140b, and one motor 150. The bicycle main bodies 120a and 120b have the sensor units 140a and 140b fixed thereto, respectively. A configuration of the bicycle main bodies 120a and 120b, and motor 150 is the same as the configuration of the bicycle main body 20, sensor unit 40, and motor 50 described above.

Such a power-assisted bicycles set 110 can share the motor 150 between the bicycle main bodies 120a and 120b by selectively connecting the motor 150 to any one of the sensor units 140a and 140b. Accordingly, the number of the motors can be reduced relative to the number of the bicycle main bodies, which is economical. The bicycle main bodies 120a and 120b may be bicycles whose users are different, or may be different types of bicycles used by the same user. Moreover, the number of the bicycle main bodies may be two or more, and the number of the motors 150 may be any number less than the number of the bicycle main bodies.

### C. Modification example:

### C-1. Modification example 1:

The motors 50a and 50b may have the same rated output and may be different only in the algorithm stored in the control device 52. Even in such a configuration, the assist characteristic can be changed in a range of the rated output of the motor, allowing the power-assisted bicycle 10 to be flexibly used depending on the situation. Alternatively, the motors 50a and 50b may have the different rated outputs and may be controlled according to the same algorithm.

### C-2. Modification example 2:

The control device 52 can be also provided not on the motor 50 side but the bicycle main body 20 side. That is, the control device 52 may be so fixed to the bicycle main body 20 that the user cannot detach. In this case, in order to attain the fit between the motor 50 selectively connected to the sensor unit 40 and the control device 52, the control device 52 may store therein a plurality of algorithms. Additionally, the control device 52 may include a user interface for accepting identification information of the attached motor. In this case, the control device 52 may decide the algorithm to be performed (algorithm corresponding to the identification information) on the basis of the input identification information. Even in such a case, when the control device 52 is replaced in a case of failure or the like, the newly attached control device 52 can read out the sensor information from the memory 43 to smoothly correct the sensor detection value.

Alternatively, the motor 50 may be provided on the bicycle main body 20 side and the control device 52 may be detachably connected to the sensor unit 40. According to such a configuration, one motor 50 can be controlled selectively through the different algorithms. In this case also, the selectively connected control device 52 can read out the sensor information from the memory 43 to smoothly correct the sensor detection value.

### C-3. Modification example 3:

The sensor information may not be necessarily the very correction value, but may be information with which the correction value can be calculated. For example, in a case where the individual variability of the sensor 41 largely varies depending on a manufacturing lot of the sensor 41, the lot number may be stored as the sensor information in the memory 43. In this case, the control device 52 may refer a table in which a correspondence relationship is defined between the lot number and the sensor correction value which are stored in the memory included in the control device 52, and decide the sensor correction value on the basis of the lot number read out from the memory 43.

### C-4. Modification example 4:

The configuration in which the motor 50 is detachably connected to the sensor unit 40 can be also applied to one bicycle main body 20 and one power-assisted unit 35 including only one motor 50. In this case, the user may detach the motor 50, which is relatively high in cost, as an antitheft measure when parking the bicycle at home or outside the home. This allows an economic loss to be reduced in a case where the power-assisted bicycle 10 is stolen. The motor 50 may be continuously used by being connected to the sensor unit 40 of the newly purchased bicycle main body 20. Even in such a case, the control device 52 of the motor 50 can easily acquire the sensor information.

### C-5. Modification example 5:

The configuration of the power-assisted bicycle 10 described above can be applied to various power-assisted moving vehicles capable of assisting the driving force generated by a human power by means of the driving force generated by an electric power. Examples of the moving vehicles like this may include a wheelchair, a three-wheeler, and a dolly for burdens, for example.

Hereinabove, the embodiments of the present invention on the basis of some embodiment examples are described, but the embodiments of the invention described above are provided for easy understanding of the invention and do not limited the invention. The present invention may be changed and modified without departing from the gist thereof, and include its equivalent, of course. Moreover, any combination or omission of the components described in Claims and Description may be made in a scope capable of solving at least a part of the above described problems or in a scope of having at least a part of the effects.

### REFERENCE SIGNS LIST

- 10: power-assisted bicycle
- 20: bicycle main body
- 21: vehicle body frame
- 22: handle
- 23: saddle
- 24: front wheel
- 25: rear wheel
- 26: drive shaft
- 27: pedal crank
- 28: pedal
- 29: sprocket
- 31: rear wheel dynamic mechanism
- 32: chain
- 35: power-assisted unit
- 40: sensor unit
- 41: sensor
- 42: record device
- 43: memory
- 50a, 50b: motor
- 51a: housing
- 52: control device
- 52a: control device
- 53a: connector
- 54a: attachment part
- 55a: hole part
- 61: motor fixing member
- 62: through-hole
- 63: attachment member
- 64: bolt
- 110: power-assisted bicycles set
- 120a, 120b: bicycle main body
- 135: power-assisted unit
- 140a, 140b: sensor unit
- 150: motor

## Claims

1. A power-assisted unit to be attached to a power-assisted moving vehicle capable of assisting a first driving force generated by a human power by means of a second driving force generated by an electric power, the power-assisted unit comprising:
a sensor unit having a sensor for detecting a physical quantity concerning the power-assisted moving vehicle, and a storage medium;
a motor for generating the second driving force; and
a control device configured to control the motor on the basis of a detection result by the sensor.

2. The power-assisted unit according to claim 1, wherein
the storage medium stores therein in advance sensor information that is information regarding an individual characteristic of the sensor, and
the control device controls the motor on the basis of the detection result by the sensor and the sensor information.

3. The power-assisted unit according to claim 2, wherein
the sensor information includes a correction value for correcting a detection value of the sensor depending on the individual characteristic.

4. The power-assisted unit according to any one of Claims 1 to 3, wherein,
at least one of the motor and the control device is configured to be detachably connected to the sensor unit.

5. The power-assisted unit according to any one of Claims 1 to 4, wherein,
the motor has the control device built therein.

6. The power-assisted unit according to any one of Claims 1 to 5, wherein,
the control device is configured to read out the sensor information stored in the storage medium, every time the power-assisted unit is activated.

7. The power-assisted unit according to any one of Claims 1 to 6, wherein,
the motors are prepared in plural numbers,
each of the plurality of motors is configured to be detachably connected to the sensor unit, and
the plurality of motors are different from each other in a specification, and any one of the plurality of motors can be selected depending on each specification to be connected to the sensor unit.

8. The power-assisted unit according to any one of Claims 1 to 6, wherein,
the motors are prepared in plural numbers,
each of the plurality of motors is configured to be detachably connected to the sensor unit, and
each of the plurality of motors has the control device built therein,
specifications are different from each other at least one of between the plurality of motors and between the control devices, and
any one of the plurality of motor can be selected depending on each specification to be connected to the sensor unit.

9. A power-assisted unit to be attached to a power-assisted moving vehicle capable of assisting a first driving force generated by a human power by means of a second driving force generated by an electric power, the power-assisted unit comprising:
a sensor unit having a sensor for detecting a physical quantity concerning the power-assisted moving vehicle;
a plurality of motors for generating the second driving force, the plurality of motors being different from each other in a specification, and any one of the plurality of motors being able to be selected depending on each specification to be detachably connected to the sensor unit; and
a control device configured to control the motor connected to the sensor unit on the basis of a detection result by the sensor.

10. A power-assisted unit to be attached to a power-assisted moving vehicle capable of assisting a first driving force generated by a human power by means of a second driving force generated by an electric power, the power-assisted unit comprising:
a sensor unit having a sensor for detecting a physical quantity concerning the power-assisted moving vehicle;
a plurality of motors for generating the second driving force, each of the plurality of motors having a control device built therein, specifications being different from each other at least one of between the plurality of motors and between the control devices, and any one of the plurality of motors being able to be selected depending on each specification to be detachably connected to the sensor unit; and
the control device configured to control the motor connected to the sensor unit on the basis of a detection result by the sensor.

11. The power-assisted unit according to Claim 7 or 9, wherein the plurality of motors are different from each other in the specification regarding at least an output of the motor.

12. The power-assisted unit according to Claim 8 or 10, wherein at least any one of aspects is provided, the aspects including
one aspect in which the plurality of motors are different from each other in the specification regarding at least an output of the motor, and
the other aspect in which the plurality of control devices are different from each other in the specification regarding at least an algorithm.

13. A power-assisted moving vehicle, comprising:
a moving vehicle body; and
the power-assisted unit according to any one of Claims 1 to 12.

14. A power-assisted moving vehicle, comprising:
a moving vehicle body; and
the power-assisted unit according to at least of Claim 4, Claim 5 and Claim 6 wherein at least Claim 4 is referred, and any one of Claims 7 to 12,
wherein
the sensor is configured to be capable of detecting the physical quantity even in a state where the sensor unit is not connected to the motor, and
the sensor unit further includes a record device for recording the detected physical quantity in the storage medium.

15. A power-assisted moving vehicle set, comprising:
the power-assisted moving vehicle according to Claim 13 wherein is referred at least one of Claim 4, Claim 5 and Claim 6 wherein at least Claim 4 is referred, and any one of Claims 7 to 12, or according to Claim 14, wherein
the power-assisted moving vehicle includes a first moving vehicle body and a second moving vehicle body as the moving vehicle body, and
the sensor unit includes a first sensor unit attached to the first moving vehicle body and a second sensor unit attached to the second moving vehicle body.

16. A method for controlling a power-assisted moving vehicle capable of assisting a first driving force generated by a human power by means of a second driving force generated by an electric power, wherein
in a moving vehicle body to which is attached a sensor unit provided with a sensor for detecting a physical quantity concerning the power-assisted moving vehicle, sensor information that is information regarding an individual characteristic of the sensor is stored in the sensor unit in advance, and
a control device configured to control a motor for generating the second driving force reads out the sensor information from the sensor unit, and the motor is controlled on the basis of the read out sensor information and a detection result by the sensor.

## Amended claims

### Amended claims under Art. 19.1 PCT

**1.** A power-assisted unit to be attached to a power-assisted moving vehicle capable of assisting a first driving force generated by a human power by means of a second driving force generated by an electric power, the power-assisted unit comprising:
a sensor unit having a sensor for detecting a physical quantity concerning the power-assisted moving vehicle, and a storage medium;
a motor for generating the second driving force; and
a control device configured to control the motor on the basis of a detection result by the sensor.

**2.** The power-assisted unit according to claim 1, wherein
the storage medium stores therein in advance sensor information that is information regarding an individual characteristic of the sensor, and
the control device controls the motor on the basis of the detection result by the sensor and the sensor information.

**3.** The power-assisted unit according to claim 2, wherein
the sensor information includes a correction value for correcting a detection value of the sensor depending on the individual characteristic.

**4.** The power-assisted unit according to any one of Claims 1 to 3, wherein,
at least one of the motor and the control device is configured to be detachably connected to the sensor unit.

**5.** The power-assisted unit according to any one of Claims 1 to 4, wherein,
the motor has the control device built therein.

**6.** (Amended) The power-assisted unit according to any one of Claims 1 to 5, wherein
the control device is configured to read out the sensor information that is the information regarding the individual characteristic of the sensor stored in the storage medium, every time the power-assisted unit is activated.

**7.** The power-assisted unit according to any one of Claims 1 to 6, wherein,
the motors are prepared in plural numbers,
each of the plurality of motors is configured to be detachably connected to the sensor unit, and
the plurality of motors are different from each other in a specification, and any one of the plurality of motors can be selected depending on each specification to be connected to the sensor unit.

**8.** The power-assisted unit according to any one of Claims 1 to 6, wherein,
the motors are prepared in plural numbers,
each of the plurality of motors is configured to be detachably connected to the sensor unit, and
each of the plurality of motors has the control device built therein,
specifications are different from each other at least one of between the plurality of motors and between the control devices, and
any one of the plurality of motor can be selected depending on each specification to be connected to the sensor unit.

**9.** A power-assisted unit to be attached to a power-assisted moving vehicle capable of assisting a first driving force generated by a human power by means of a second driving force generated by an electric power, the power-assisted unit comprising:
a sensor unit having a sensor for detecting a physical quantity concerning the power-assisted moving vehicle;
a plurality of motors for generating the second driving force, the plurality of motors being different from each other in a specification, and any one of the plurality of motors being able to be selected depending on each specification to be detachably connected to the sensor unit; and
a control device configured to control the motor connected to the sensor unit on the basis of a detection result by the sensor.

**10.** A power-assisted unit to be attached to a power-assisted moving vehicle capable of assisting a first driving force generated by a human power by means of a second driving force generated by an electric power, the power-assisted unit comprising:
a sensor unit having a sensor for detecting a physical quantity concerning the power-assisted moving vehicle;
a plurality of motors for generating the second driving force, each of the plurality of motors having a control device built therein, specifications being different from each other at least one of between the plurality of motors and between the control devices, and any one of the plurality of motors being able to be selected depending on each specification to be detachably connected to the sensor unit; and
the control device configured to control the motor connected to the sensor unit on the basis of a detection result by the sensor.

**11.** The power-assisted unit according to Claim 7 or 9, wherein the plurality of motors are different from each other in the specification regarding at least an output of the motor.

**12.** The power-assisted unit according to Claim 8 or 10, wherein at least any one of aspects is provided, the aspects including
one aspect in which the plurality of motors are different from each other in the specification regarding at least an output of the motor, and
the other aspect in which the plurality of control devices are different from each other in the specification regarding at least an algorithm.

**13.** A power-assisted moving vehicle, comprising:
a moving vehicle body; and
the power-assisted unit according to any one of Claims 1 to 12.

**14.** (Amended) A power-assisted moving vehicle, comprising:
a moving vehicle body; and
the power-assisted unit according to at least of Claim 4, Claim 5 and Claim 6 wherein at least Claim 4 is referred, and any one of Claims 7, Claim 8, Claim 11, and Claim 12,
wherein
the sensor is configured to be capable of detecting the physical quantity even in a state where the sensor unit is not connected to the motor, and
the sensor unit further includes a record device for recording the detected physical quantity in the storage medium.

**15.** A power-assisted moving vehicle set, comprising:
the power-assisted moving vehicle according to Claim 13 wherein is referred at least one of Claim 4, Claim 5 and Claim 6 wherein at least Claim 4 is referred, and any one of Claims 7 to 12, or according to Claim 14, wherein
the power-assisted moving vehicle includes a first moving vehicle body and a second moving vehicle body as the moving vehicle body, and
the sensor unit includes a first sensor unit attached to the first moving vehicle body and a second sensor unit attached to the second moving vehicle body.

**16.** A method for controlling a power-assisted moving vehicle capable of assisting a first driving force generated by a human power by means of a second driving force generated by an electric power, wherein
in a moving vehicle body to which is attached a sensor unit provided with a sensor for detecting a physical quantity concerning the power-assisted moving vehicle, sensor information that is information regarding an individual characteristic of the sensor is stored in the sensor unit in advance, and
a control device configured to control a motor for generating the second driving force reads out the sensor information from the sensor unit, and the motor is controlled on the basis of the read out sensor information and a detection result by the sensor.
